# EUROPEAN PATENT APPLICATION

(11) **EP 2 323 317 A1**
(43) Date of publication of application: **18.05.2011**
(21) Application number: 09811297.2
(22) Date of filing: 04.09.2009
(51) Int. Cl.: H04L 12/56

(54) **BAND CONTROL METHOD AND BAND CONTROL DEVICE FOR NODE DEVICE**

(30) Priority: 04.09.2008 JP 2008226623
(71) Applicant: NEC Corporation, Minato-ku Tokyo 108-8001 (JP)
(72) Inventor: HIRASAWA, Daisuke, Tokyo 108-0073 (JP)
(74) Representative: MacDougall, Alan John Shaw
(86) International application number: PCT/JP2009/004371
(87) International publication number: WO 2010/026767

(57) **Abstract**

A node device and a bandwidth control method are provided that ensure fairness among bandwidths for use assigned to data flows even when output-side communication network accommodation functionality and bandwidth control functionality operate with different clocks. The node device includes a plurality of subscriber communication network accommodation sections SA₁ to SA_{N} connected to a subscriber communication network, carrier communication network accommodation sections CNA₁ to CNA_{M} connected to carrier communication networks, a bandwidth control section 100, and a data flow rate management section 101. The bandwidth control section 100 performs bandwidth control for a reception data flow to be transferred to a carrier communication network accommodation section CNAⱼ, based on a deviation in frequency between an operation clock signal CLK_{Aj} at the carrier communication network accommodation section CNAⱼ and an operation clock signal CLK_{B} at the bandwidth control section. The data flow rate management section 101 adjusts the data flow rate of each of a plurality of reception data flows in accordance with the bandwidth control.

## Description

### [Technical Field]

The present invention relates to a node device which multiplexes a plurality of reception data flows and outputs them and, more particularly, to a bandwidth control method and device for use in a node device having a function of performing bandwidth control across flows.

### [Background Art]

In an Internet service network, a node device that multiplexes a plurality of subscriber data and transfers them to a carrier communication network (hereinafter, such a node is referred to as a subscriber accommodation device) is provided with bandwidth control functionality for dynamically assigning a bandwidth for use to each subscriber. For example, according to PTL 1, bandwidth control is performed in such a manner that a bandwidth demanded by each subscriber device is forecasted depending on the state of each subscriber device (such as the presence/absence and priority of data transmission) and the forecast is fed back to each subscriber device. In a subscriber accommodation device disclosed in PTL 2, a method is employed in which an OLT determines a bandwidth to assign to each of a plurality of ONUs depending on the number of user terminals accommodated by each ONU.

Moreover, in PLTs 3 and 4, technology is disclosed in which input packets exceeding an assigned bandwidth is discarded, thereby ensuring fairness among flows.

### [Citation List]

### [Patent Literature]

### [PTL 1]

Japanese Patent Application Unexamined Publication No. 2004-134968 (paragraphs 0012 to 0014)

### [PTL 2]

Japanese Patent Application Unexamined Publication No. 2006-20240 (paragraphs 0005 to 0008)

### [PTL 3]

Japanese Patent Application Unexamined Publication No. 2002-344500 (paragraphs 0066 to 0067)

### [PTL 4]

Japanese Patent Application Unexamined Publication No. 2003-224597 (paragraphs 0050 to 0052)

### [Summary of Invention]

### [Technical Problem]

In such a subscriber accommodation device, there are some cases where it is desired, for the sake of design, that subscriber communication network accommodation functionality, carrier communication network accommodation functionality, and bandwidth control functionality as described above be implemented on separate pieces of hardware and be operated with individual clocks.

However, if these functionalities are operated individually with different clocks, the respective clock frequencies do not always perfectly coincide. There are some cases where the sum total of used bandwidths that are assigned to subscribers based on the operation clock frequency for a bandwidth control section exceeds a physical bandwidth that can be output from a carrier communication network connection port, particularly when a deviation in operation clock frequency exists between the bandwidth control section and carrier communication network accommodation section. In this case, excess data is randomly discarded somewhere along a transmission path within the device before the data reaches the carrier communication network connection port. This destroys fairness in bandwidth control, which is supposed to be fairly performed by the bandwidth control section depending on the contents of a service contract with each subscriber, types of data, and the like.

An object of the present invention is to provide a node device, as well as a bandwidth control method and bandwidth control device for use in the same, that ensures fairness among bandwidths for use assigned to data flows even when the output-side carrier network accommodation functionality and the bandwidth control functionality operate with individual clocks.

### [Solution to Problem]

A node device according to the present invention is a node device which outputs a plurality of reception data flows received from a first communication network to a second communication network while performing bandwidth control, characterized by comprising: a plurality of first communication network accommodation means connected to the first communication network; at least one second communication network accommodation means which is connected to the second communication network and operates in accordance with a first operation clock signal; a bandwidth control means which operates in accordance with a second operation clock signal and performs bandwidth control for a reception data flow to be transferred to the second communication network accommodation means based on a deviation in frequency between the first operation clock signal and the second operation clock signal; and a data flow rate management means which adjusts a data flow rate of the reception data flow in accordance with the bandwidth control.

A bandwidth control device according to the present invention is a bandwidth control device in a node device which includes first communication network accommodation means connected to a first communication network, a second communication network accommodation means connected to a second communication network and operating in accordance with a first operation clock signal, and a data flow rate management means for adjusting a data flow rate of the reception data flow in accordance with bandwidth control, characterized by comprising: a clock generation means which generates a second operation clock signal for bandwidth control operation; a frequency deviation determination means which determines a deviation in frequency between the first operation clock signal and the second operation clock signal; and a bandwidth adjustment means which adjusts a bandwidth assigned to a reception data flow to be transferred to the second communication network accommodation means, based on the deviation in frequency.

A bandwidth control method according to the present invention is a bandwidth control method for use in a node device which includes first communication network accommodation means connected to a first communication network, a second communication network accommodation means connected to a second communication network and operating in accordance with a first operation clock signal, and a data flow rate management means for adjusting a data flow rate of the reception data flow in accordance with bandwidth control, characterized by: generating a second operation clock signal for bandwidth control operation; determining a deviation in frequency between the first operation clock signal and the second operation clock signal; and performing bandwidth control for a reception data flow to be transferred to the second communication network accommodation means, based on the deviation in frequency.

### [Advantageous Effects of Invention]

According to the present invention, it is possible to ensure fairness among bandwidths for use assigned to data flows even when the output-side carrier network accommodation functionality and the bandwidth control functionality operate individually with different clocks.

### [Brief Description of Drawings]

[FIG. 1]

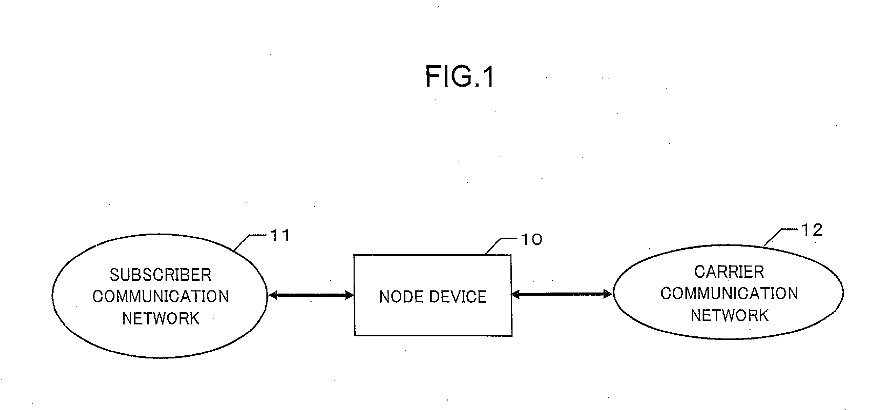

   FIG. 1 is a schematic system diagram showing a structure of an Internet service network including a node device according to an embodiment of the present invention.
[FIG. 2]

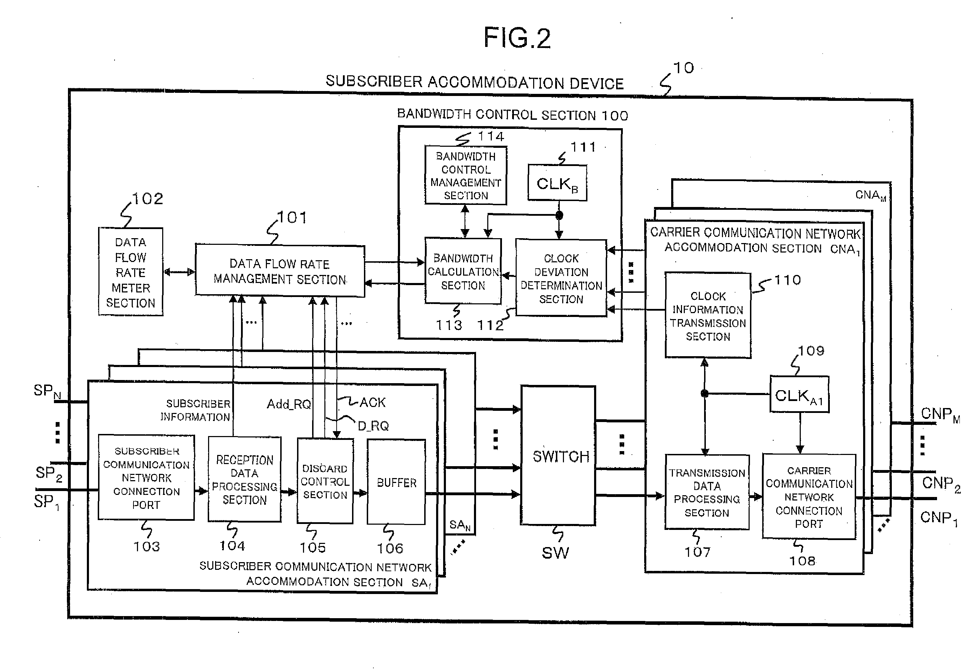

   FIG. 2 is a block diagram showing a schematic functional configuration of a subscriber accommodation device according to an exemplary embodiment of the present invention.
[FIG. 3]

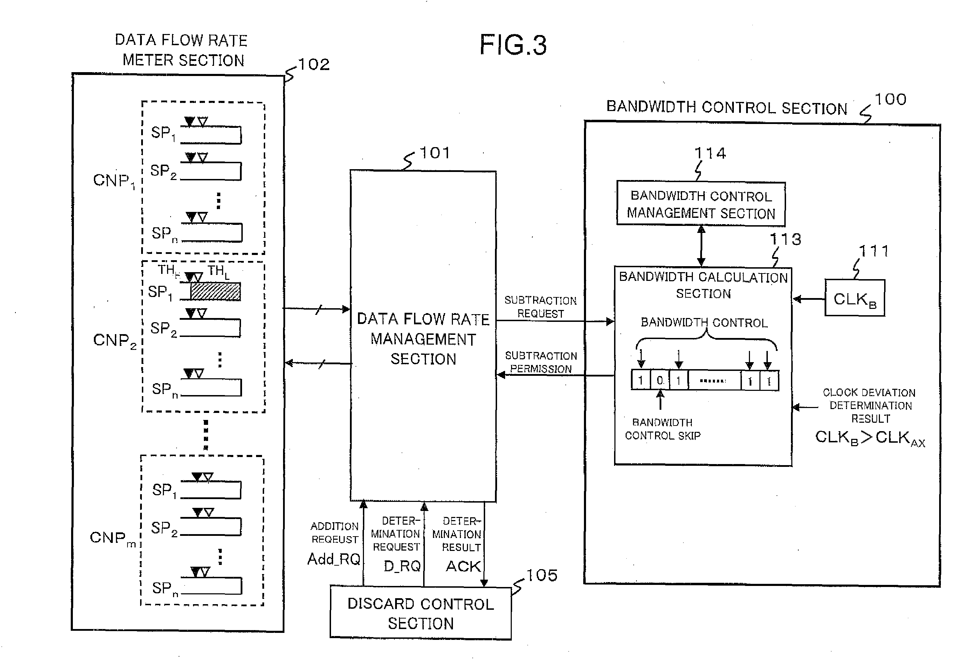

   FIG. 3 is a schematic diagram for briefly describing bandwidth control by a bandwidth control section 100 shown in FIG. 2
[FIG. 4]

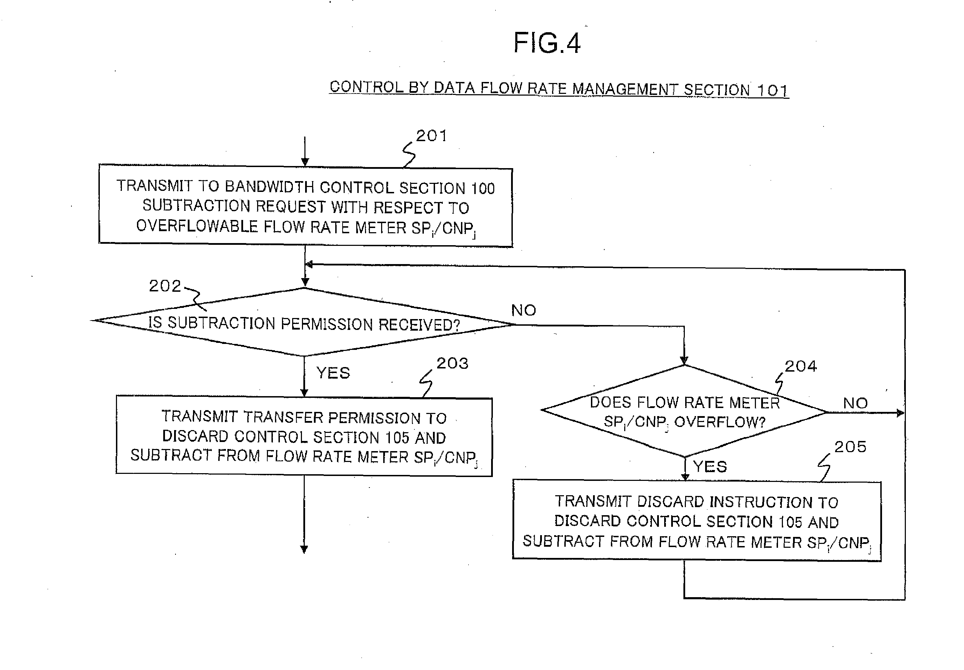

   FIG. 4 is a flowchart showing control by a data flow rate management section 101 in the present exemplary embodiment.
[FIG. 5]

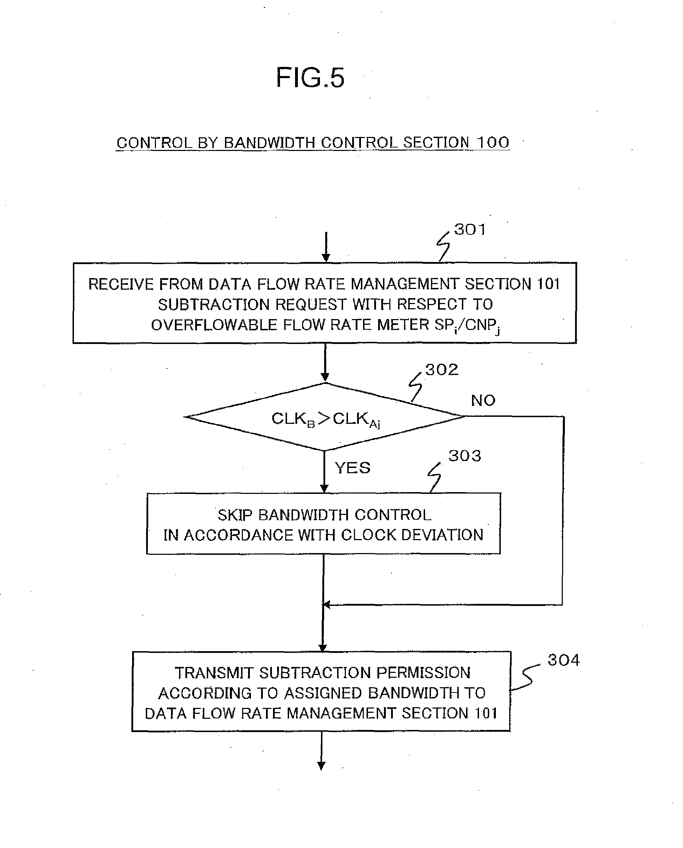

   FIG. 5 is a flowchart showing control by the bandwidth control section 100 in the present exemplary embodiment.
[FIG. 6]

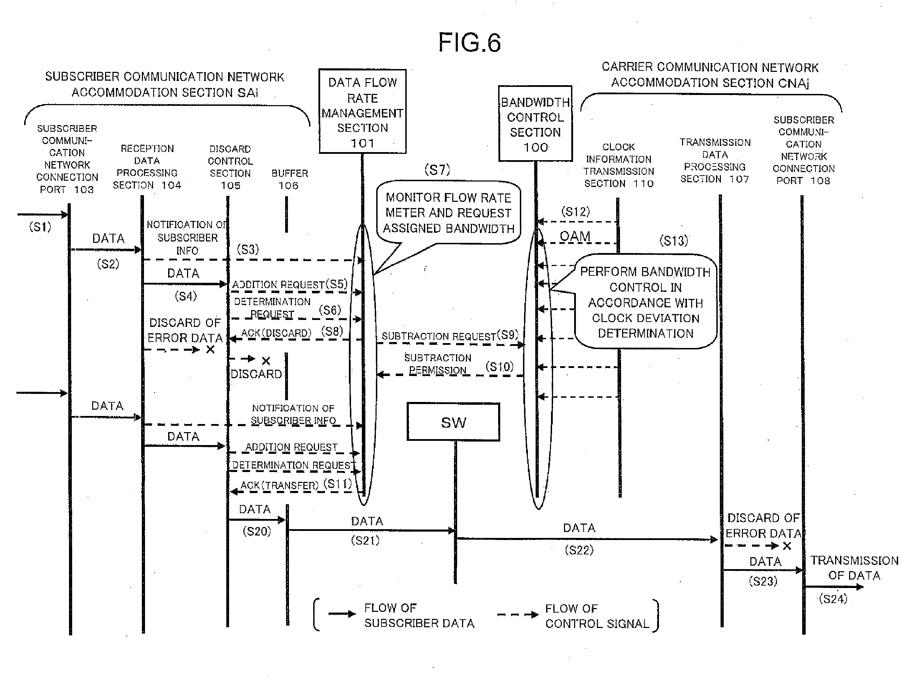

   FIG. 6 is a sequence diagram showing an example of the overall operation of the subscriber accommodation device 10 according to the present exemplary embodiment.

### [Description of Embodiments]

Referring to FIG. 1, a node device 10 can provide mutual connections between a subscriber communication network 11 to which a plurality of subscriber terminals are connected and a plurality of carrier communication networks 12.

The node device 10 has N ports connected to the subscriber communication network 11 and M ports connected to the carrier communication networks 12, where, as a specific example, N = 25 and M = 64. Here, to simplify the description, a description will be given of a subscriber accommodation device, as an example of the node device, into which subscriber data from the plurality of subscriber terminals flow from one or more of the subscriber communication network connection ports and in which the subscriber data are multiplexed and transmitted to one of the ports connected to the carrier communication networks 12.

### 1. Configuration

Referring to FIG. 2, the subscriber accommodation device 10 according to the present exemplary embodiment includes N subscriber communication network accommodation sections SA₁ to SA_{N} corresponding to the N subscriber communication network connection ports SP₁ to SP_{N}, respectively, and M carrier communication network accommodation sections CNA₁ to CNA_{M} corresponding to the M carrier communication network connection ports CNP₁ to CNP_{M}, respectively, and subscriber data output from any subscriber communication network accommodation section SAᵢ can be transferred to any carrier communication network accommodation section CNAⱼ through a switch SW. The subscriber accommodation device 10 further includes a bandwidth control section 100, a data flow rate management section 101, and a data flow rate meter section 102.

The bandwidth control section 100 performs bandwidth control while referring to clock information from the carrier communication network accommodation sections CNA₁ to CNA_{M} and data flow rates managed by the data flow rate management section 101. The configurations and operations of the bandwidth control section 100, data flow rate management section 101, and data flow rate meter section 102 will be described later.

Each of the subscriber communication network accommodation sections SA₁ to SA_{N} includes a subscriber communication network connection port 103, a reception data processing section 104, a discard control section 105, and a buffer 106.

The reception data processing section 104, while performing an error check on subscriber data received at the subscriber communication network connection port 103, extracts subscriber information such as a destination address, frame length, and virtual LAN (VLAN) identifier from the subscriber data as management information and outputs the subscriber information to the data flow rate management section 101. If there is no problem in the error check, the received subscriber data is transferred to the discard control section 105. If there is a problem in the error check, the subscriber data is discarded.

The discard control section 105 performs buffering control on subscriber data stored in the buffer 106. The discard control section 105, upon receiving subscriber data as an input from the reception data processing section 104, sends an addition request Add_RQ and a discard determination request D_RQ, which indicate an input of data, to the data flow rate management section 101 and, in accordance with a response ACK from the data flow rate management section 101, transfers ( to store in the buffer) or discards the data in question. When receiving from the data flow rate management section 101 an instruction to discard subscriber data, the discard control section 105 discards the subscriber data without storing it in the buffer 106. Note that the data storage states of the buffers 106 in the subscriber communication network accommodation sections SA₁ to SA_{N} are reflected to meters in the data flow rate meter section 102, which will be described later.

Data that is not discarded by the discard control section 105 is stored in the buffer 106, and the data stored in the buffer 106 is transferred in accordance with its header information to an appropriate carrier communication network accommodation section CNAⱼ through the switch SW.

Each of the carrier communication network accommodation sections CNA₁ to CNA_{M} includes a transmission data processing section 107, a carrier communication network connection port 108, a clock generation section 109, and a clock information transmission section 110. The transmission data processing section 107 processes header information and the like on data transferred from the switch SW and sends out the data to the carrier communication network via the carrier communication network connection port 108. The carrier communication network connection port 108 has a possible transmission physical bandwidth. Each carrier communication network accommodation section CNAⱼ operates in accordance with a clock signal CLK_{Aj} generated by its own clock generation section 109.

The clock information transmission section 110 notifies the bandwidth control section 100, spontaneously or as requested, of timing information which depends on the frequency of the clock signal CLK_{Aj}. For example, the clock information transmission section 110 automatically transmits a timing signal to the bandwidth control section 100 at intervals of a period obtained by dividing the frequency of the clock signal CLK_{Aj} by a predetermined integer. Specifically, one piece of OAM (operations, administration, maintenance) data is transmitted every 256 clocks of the clock signal CLK_{Aj}, whereby it is possible to notify the bandwidth control section 13 of information on the clock frequency/period of the clock signal CLK_{Aj}.

The bandwidth control section 100 includes a clock generation section 111, a clock deviation determination section 112, a bandwidth adjustment section 113, and a bandwidth control management section 114, and bandwidth control operation is performed in accordance with a clock signal CLK_{B} generated by the clock generation section 111.

The clock deviation determination section 112 compares the clock information received from the clock information transmission section 110 of the carrier communication network accommodation section CNAⱼ with its own clock signal CLK_{B} and determines whether or not its own clock signal CLK_{B} is faster than the clock signal CLK_{Aj} of the carrier communication network accommodation section CNAⱼ. For example, assuming that one piece of OAM data is received every 256 clocks of the clock signal CLK_{Aj}, the timing of receiving the OAM data is compared with a timing obtained by dividing the frequency of the clock signal CLK_{B} by the same integer, whereby it is possible to compare the frequencies of its own clock signal CLK_{B} and the clock signal CLK_{Aj} of the carrier communication network accommodation section CNAⱼ.

As mentioned earlier, when the frequency of the clock signal CLK_{B} is higher than that of the clock signal CLK_{Aj}, there is a possibility that the sum total of bandwidths assigned to those subscribers multiplexed into a single carrier communication network connection port exceeds the physical bandwidth of this carrier communication network connection port. Therefore, according to the present exemplary embodiment, when the clock signal CLK_{B} > the clock signal CLK_{Aj} in terms of frequency, the bandwidth adjustment section 113 performs bandwidth assignment adjustment in such a manner that the clock deviation in question is cancelled, thereby allowing the discard control section 105 to discard data automatically under control of the data flow rate management section 101. Thus, equivalently, it is possible to keep the sum total of bandwidths assigned to subscribers within the physical bandwidth of a carrier communication network connection port, and it is possible to send out data to a carrier communication network while maintaining fairness through the contents of a service contract with each subscriber, types of data, and the like. Hereinafter, a detailed description will be given.

### 2. Operation

Referring to FIG. 3, first, the data flow rate meter section 102 is provided with N x M data flow rate meters corresponding to all combinations of connections between the N subscriber communication network connection ports SP₁ to SP_{N} and M carrier communication network connection ports CNP₁ to CNP_{M}. Here, to simplify the description, illustrated as an example are meters that correspond to the N subscriber communication network connection ports SP₁ to SP_{N}, respectively, for each carrier communication network connection port. Hereinafter, a data flow rate meter that indicates the amount of data transferred from one subscriber communication network connection port SPᵢ to one carrier communication network connection port CNPⱼ will be denoted by "SPᵢ/CNPⱼ."

Each data flow rate meter SPᵢ/CNPⱼ is composed of a counter, which is incremented by 1 when data arrives at its corresponding subscriber communication network connection port SPᵢ and which is decremented by 1 when the data is transferred to the buffer 106 or discarded at the discard control section 105. Moreover, a discard threshold value TH_{H} (black upside-down triangle V), which serves as a reference to start discarding data, and a transfer requesting threshold value TH_{L} (white upside-down triangle ∇), which is lower than the discard threshold value TH_{H} and serves as a reference to start requesting data transfer, are preset on the data flow rate meter SPᵢ/CNPⱼ in the present exemplary embodiment. While monitoring such data flow rate meters SPᵢ/CNPⱼ, the data flow rate management section 101 performs data transfer and data discard according to the present exemplary embodiment in accordance with control by the bandwidth control section 100. Hereinafter, a detailed description will be given of bandwidth control operation at the time of normal data transfer, data discard operation, and bandwidth control operation according to the present embodiment.

### 2.1) Normal data transfer control

First, normal data transfer control is transfer control performed in a state where data discard control is not performed when the frequency of the clock signal CLK_{Aj} at a transfer-destination carrier communication network accommodation section CNAⱼ is equal to or faster than the frequency of the clock signal CLK_{B} at the bandwidth control section 100.

Referring to FIGS. 2 and 3, when data arrives at a subscriber communication network connection port SPᵢ, the reception data processing section 104 notifies subscriber information to the data flow rate management section 101 and transfers the reception data to the discard control section 105 unless the reception data is error data. The discard control section 105, upon receiving the reception data, outputs an addition request Add_RQ and a discard determination request D_RQ to the data flow rate management section 101.

The data flow rate management section 101 identifies from the subscriber information a carrier communication network connection port CNPⱼ to which the reception data should be transferred and, in response to the addition request Add_RQ from the discard control section 105, increments a corresponding data flow meter SPᵢ/CNPⱼ. If the counted value of the data flow rate meter SPᵢ/CNPⱼ does not exceed the discard threshold value TH_{H}, the data flow rate management section 101 outputs a subtraction request to the bandwidth adjustment section 113 of the bandwidth control section 100. This subtraction request is a request to decrement the counter of the data flow rate meter SPᵢ/CNPⱼ in question and, in other words, means a request for a transfer rate used when transferring the reception data received at the subscriber communication network connection port SPᵢ to the carrier communication network connection port CNPⱼ.

The bandwidth adjustment section 113 returns a subtraction permission to the data flow rate management section 101 at timings according to a bandwidth that is assigned to the subscriber communication network connection port SPᵢ by the bandwidth control management section 114. For example, it is assumed that the bandwidth assigned to the subscriber communication network connection port SPᵢ is 1000 Mbps, which is expressed by a string of a predetermined number of bits (a bandwidth control bit string). In this case, when maintaining the originally assigned bandwidth, a subtraction permission is sequentially output at each timing of "1" in this bandwidth control bit string including the predetermined number of bits. On the other hand, when reducing the assigned bandwidth, as many bits as a number equivalent to a reduction in bandwidth are randomly inversed in the bandwidth control bit string including the predetermined number of bits, and no subtraction permission is transmitted at each timing of an inversed bit position, whereby the interval between transmissions of a subtraction permission is increased. At the bandwidth adjustment section 113 in FIG. 3, an example is schematically illustrated where an assigned bandwidth is reduced by outputting a subtraction permission for bandwidth control at each bit "1" and skipping bandwidth control at each bit "0".

The data flow management section 101, upon receiving the subtraction permission for the data flow rate meter SPᵢ/CNPⱼ in this manner, decrements the counter of the data flow rate meter SPᵢ/CNPⱼ and also outputs a transfer permission determination result ACK to the discard control section 105. The discard control section 105, upon receiving the transfer permission determination result ACK, transfers the reception data to the buffer 106, from which the reception data is transferred to the carrier communication network accommodation section CNAⱼ through the switch SW as described above. Since the clock signal CLK_{Aj} is equal to or faster than the clock signal CLK_{B}, the carrier communication network accommodation section CNAⱼ can transmit the reception data to the carrier communication network within its own physical bandwidth.

### 2.2) Data discard control

In a state where the data flow rate management section 101 performs data transfer in accordance with an assigned bandwidth (subtraction permissions) from the bandwidth adjustment section 113 as described above, it is assumed that the number of increments caused by the arrival of data becomes larger than the number of decrements caused by the transfer of data and that the counted value of the data flow rate meter SPᵢ/CNPⱼ exceeds the discard threshold value TH_{H} (black upside-down triangle ▼), with the buffer 106 falling in an overflow state. The data flow rate management section 101, upon knowing that the counted value exceeds the discard threshold value TH_{H}, returns to the discard control section 105 a determination result ACK instructing to discard corresponding reception data. Upon receiving this discard instruction, the discard control section 105 discards the corresponding reception data, without storing it in the buffer 106. Thus, it is possible to avoid transferring data exceeding the assigned bandwidth to the carrier communication network accommodation section.

### 2.3) Bandwidth control operation caused by clock deviation

When the frequency of the clock signal CLK_{B} is higher than that of the clock signal CLK_{Aj}, the bandwidth adjustment section 113 performs bandwidth assignment adjustment in such a manner that the clock deviation in question is cancelled as mentioned earlier. Hereinafter, this will be described in detail with reference to FIGS. 4 and 5.

In FIGS. 4 and 5, it is assumed here that the counted value of the data flow rate meter SPᵢ/CNPⱼ exceeds the transfer request threshold value TH_{L} (white upside-down triangle ∇) and is lower than the discard threshold value TH_{H}. That is, it is assumed that the buffer 106 monitored by using the data flow rate meter SPᵢ/CNPⱼ is coming close to an overflow state due to a deviation in clock frequency between the bandwidth control section 100 and the carrier communication network accommodation section.

Referring to FIG. 4, when the counted value of the data flow rate meter SPᵢ/CNPⱼ exceeds the transfer request threshold value TH_{L}, the data flow rate management section 101 transmits a subtraction request to the bandwidth adjustment section 113 of the bandwidth control section 100 (Step 201) and determines whether or not a subtraction permission as a response to the subtraction request is received from the bandwidth adjustment section 113 (Step 202).

Upon receiving a subtraction permission (Step 202: YES), the data flow rate management section 101 decrements the counter of the data flow rate meter SPᵢ/CNPⱼ and also outputs a transfer permission determination result ACK to the discard control section 105 (Step 203). The discard control section 105, upon receiving the transfer permission determination result ACK, transfers the reception data in question to the buffer 106, from which the reception data is transferred to the carrier communication network accommodation section CNAⱼ through the switch SW as described above. This is the above-described normal data transfer control.

On the other hand, if a subtraction permission is not received (Step 202: NO), the data flow rate management section 101 determines whether or not the counted value of the data flow rate meter SPᵢ/CNPⱼ exceeds the discard threshold value TH_{H} (Step 204). When the counted value does not exceed the discard threshold value TH_{H} (Step 204: NO), the process goes back to Step 202. In the meantime, since reception data arrive, the counted value of the data flow rate meter SPᵢ/CNPⱼ should exceed the discard threshold value TH_{H} before long.

When the counted value exceeds the discard threshold value TH_{H} (Step 204: YES), the data flow rate management section 101, as described above, returns a determination result ACK instructing to discard the reception data in question to the discard control section 105 and decrements the counted value of the data flow rate meter SPᵢ/CNPⱼ (Step 205). At this discard instruction, the discard control section 105 discards the reception data.

Accordingly, the data flow rate management section 101 repeats Step 204 or Step 205 until receiving a subtraction permission from the bandwidth adjustment section 113 and discards reception data each time the counted value exceeds the discard threshold value TH_{H}. That is, as the interval between receptions of a subtraction permission in response to a subtraction request becomes longer, the counted value of the data flow rate meter SPᵢ/CNPⱼ comes to exceed the discard threshold value TH_{H} due to data arriving meanwhile, whereby the reception data is automatically discarded.

Referring to FIG. 5, upon receiving from the data flow rate management section 101 a subtraction request attributable to the fact that the counted value of the data flow rate meter SPᵢ/CNPⱼ exceeds the transfer request threshold value TH_{L} (Step 301), the bandwidth adjustment section 113 receives from the clock deviation determination section 112 a determination result indicating the presence/absence of a clock deviation and determines whether or not the clock signal CLK_{B} > the clock signal CLK_{Aj} in terms of frequency (Step 302). When the clock signal CLK_{B} > the clock signal CLK_{Aj} (Step 302: YES), the bandwidth adjustment section 113 performs bandwidth assignment adjustment by randomly skipping bits in the above-described bandwidth control bit string so that the clock deviation is cancelled (Step 303) and, in accordance with that adjustment, adjusts the interval between transmissions of a subtraction permission to the data flow rate management section 101 (Step 304).

For example, when reducing an assigned bandwidth, as many bits as a number equivalent to a reduction in bandwidth are randomly inversed in the bandwidth control bit string including a predetermined number of bits, and no subtraction permission is transmitted at each timing of an inversed bit position, whereby the interval between transmissions of a subtraction permission is increased. Specifically, assuming that a bandwidth control bit string equivalent to a certain assigned bandwidth is composed of one thousand "1" bits, then if 10 bits in the string are inversed, the number of subtraction permissions is reduced to 990 during the same period, whereby it is possible to reduce the originally assigned bandwidth by 1/100. Thus, it is possible to make a slight adjustment in bandwidth with precision by using the bandwidth control bit string.

If the frequency of the clock signal CLK_{B} is not higher than that of the clock signal CLK_{Aj} (Step 302: NO), bandwidth control is not skipped, and a subtraction permission is transmitted to the data flow rate management section 101 at transmission timings according to the originally assigned bandwidth as in the case of normal data transfer (Step 304).

### 2.4) Operation example

Referring to FIG. 6, when data arrives at the subscriber communication network connection port 103 of a subscriber communication network accommodation section SAᵢ (S1), the data is transferred to the reception data processing section 104 (S2). The reception data processing section 104 performs an error check and the like and, unless the data is error data, notifies subscriber information on the data to the data flow rate management section 101 (S3) and transfers the data to the discard control section 105 (S4). When the data is error data, the data is discarded at the reception data processing section 104. The discard control section 105, upon receiving the reception data, outputs an addition request Add_RQ and a discard determination request D_RQ to the data flow rate management section 101 (S5, S6).

The data flow rate management section 101 identifies from the subscriber information a carrier communication network accommodation section CNAⱼ to which the reception data should be transferred and, as described above, increments a corresponding data flow rate meter SPᵢ/CNPⱼ in response to the addition request Add_RQ from the discard control section 105. The data flow rate management section 101 monitors the counted value of the data flow rate meter SPᵢ/CNPⱼ and requests an assigned bandwidth of the bandwidth control section 100 (S7).

Specifically, if the counted value of the data flow rate meter SPᵢ/CNPⱼ exceeds the discard threshold value TH_{H}, the data flow rate management section 101 returns to the discard control section 105 an ACK of discard instruction (S8), whereby the discard control section 105 discards the reception data in question. When the counted value of the data flow rate meter SPᵢ/CNPⱼ is not larger than the discard threshold value TH_{H}, the data flow rate management section 101 transmits a subtraction request to the bandwidth control section 100 (S9) and, upon receiving a subtraction permission in response to the subtraction request (S10), transmits to the discard control section 105 an ACK of transfer permission in accordance with the subtraction permission (S11).

The bandwidth control section 100 periodically receives OAM data from the clock information transmission section 110 of the carrier communication network accommodation section CNAⱼ (S12). The clock deviation determination section 112 of the bandwidth control section 100 performs clock deviation determination based on the timing of receiving OAM data, and the bandwidth adjustment section 113 performs bandwidth control according to the clock deviation determination (S13). That is, the bandwidth adjustment section 113 transmits a subtraction permission to the data flow rate management section 101 at timings according to an assigned bandwidth (S10).

The discard control section 105 having received the ACK of transfer permission transfers the reception data to the buffer 106 (S20), and the data stored in the buffer 106 are transferred to the transmission data processing section 107 of the carrier communication network accommodation section CNAⱼ through the switch SW (S21, S22). Although the data are discarded if an error is detected at the transmission data processing section 107, the data are transferred to the carrier communication network connection port 108 if no error is detected (S23) and sent out to the carrier communication network (S24).

As described above, according to the present example, reception data that is presumed to exceed the physical bandwidth of the carrier communication network accommodation section CNAⱼ due to the presence of a clock deviation is discarded beforehand at the discard control section 105 of the subscriber communication network accommodation section SAᵢ. Accordingly, it is possible to avoid a situation where such reception data is randomly discarded in the course between the reception data processing section 104 of the subscriber communication network accommodation section SAᵢ and the transmission data processing section 107 of the carrier communication network accommodation section CNAⱼ, resulting in fairness among subscribers' bandwidths being ignored.

### 2.5) Effects

As shown at Steps 202 to 205 in FIG. 4, the longer the interval between receptions of a subtraction permission in response to a subtraction request, the higher the possibility is that the counted value of the data flow rate meter SPᵢ/CNPⱼ exceeds the discard threshold value TH_{H} due to data arriving meanwhile. When the counted value exceeds the discard threshold value TH_{H}, the reception data is automatically discarded. According to the present embodiment, the interval between receptions of a subtraction permission in response to a subtraction request is made longer by a period of time equivalent to a clock deviation or more, based on a bandwidth control bit string corresponding to a bandwidth assigned to each subscriber, whereby data discard can be performed at the discard control section 105 in each subscriber communication network accommodation section. Accordingly, it is possible to transmit data to a carrier communication network within the physical bandwidth of the carrier communication network, while maintaining fairness through the contents of a service contract with each subscriber, types of data, and the like. In other words, the subscriber accommodation device 10 according to the present embodiment can realize bandwidth fairness control by considering a clock frequency deviation for each output port.

As described above, the bandwidth control section of the subscriber accommodation device according to the present exemplary embodiment is provided with a function of detecting a deviation in operation clock frequency from a carrier communication network accommodation section and adjusting a bandwidth for use assigned to each subscriber. Thereby, it is possible to suppress random data discard occurring along a path within the device before data reaches a subscriber communication network connection port, and it is possible to transmit data to a carrier communication network while maintaining fairness that is controlled to be fairly ensured depending on the contents of a service contract with each subscriber, types of data, and the like.

Moreover, since the function of detecting a deviation in operation clock frequency from a carrier communication network accommodation section is provided to the bandwidth control section, it is not necessary to add to each carrier communication network accommodation section or each subscriber communication network accommodation section a function of detecting and adjusting a deviation in operation clock from the bandwidth control section. Accordingly, there is also an advantage that needless costs can be avoided when an additional carrier communication network accommodation section and/or subscriber communication network accommodation section is installed.

### [Industrial Applicability]

The present invention is applicable to any system, such as a subscriber accommodation device in an Internet service network, in which a clock deviation can exist between the carrier communication network side and the bandwidth control side.

### [Reference Signs List]

- 10: Subscriber accommodation device
- 11: Subscriber communication network
- 12: Carrier communication network
- 100: Bandwidth control section
- 101: Data flow rate management section
- 102: Data flow rate meter section
- SA₁ to SA_{N}: Subscriber communication network accommodation sections
- 103: Subscriber communication network connection port
- 104: Reception data processing section
- 105: Discard control section
- 106: Buffer
- SW: Switch
- CNA₁ to CNA_{M}: Carrier communication network accommodation sections
- 107: Transmission data processing section
- 108: Carrier communication network connection port
- 109: Clock generation section
- 110: Clock information transmission section
- 111: Clock generation section
- 112: Clock deviation determination section
- 113: Bandwidth adjustment section
- 114: Bandwidth control management section

## Claims

1. A node device which outputs a plurality of reception data flows received from a first communication network to a second communication network while performing bandwidth control, **characterized by** comprising:
a plurality of first communication network accommodation means connected to the first communication network;
at least one second communication network accommodation means which is connected to the second communication network and operates in accordance with a first operation clock signal;
a bandwidth control means which operates in accordance with a second operation clock signal and performs bandwidth control for a reception data flow to be transferred to the second communication network accommodation means based on a deviation in frequency between the first operation clock signal and the second operation clock signal; and
a data flow rate management means which adjusts a data flow rate of the reception data flow in accordance with the bandwidth control.

2. The node device according to claim 1, **characterized in that** the bandwidth control means reduces a bandwidth assigned to the reception data flow when the second operation clock signal has a higher frequency than the first operation clock signal.

3. The node device according to claim 2, **characterized in that** the bandwidth control means, in response to a transfer request from the data flow rate management means, returns a transfer permission to the data flow rate management means at time intervals according to the bandwidth assigned to the reception data flow.

4. The node device according to claim 3, **characterized in that** the bandwidth control means is provided with a bandwidth control bit string corresponding to the bandwidth assigned to the reception data flow and changes as many bit values in the bandwidth control bit string as a number equivalent to a reduction in the assigned bandwidth, thereby adjusting the time interval between returning the transfer permission.

5. The node device according to claim 3 or 4, **characterized in that** when the data flow rate exceeds a predetermined transfer request threshold value, the data flow rate management means outputs a transfer request to the bandwidth control means and, upon each receipt of an input of the transfer permission from the bandwidth control means in response to the transfer request, transfers data of the reception data flow to the second communication network accommodation means.

6. The node device according to any one of claims 1 to 5, **characterized in that** when the data flow rate exceeds a predetermined discard threshold value, the data flow rate management means discards data of the reception data flow received at the first communication network accommodation means.

7. The node device according to any one of claims 1 to 6, **characterized in that**
the second communication network accommodation means comprises:
a clock generation means which generates the first operation clock signal;
a second communication network connection port connected to the second communication network;
a transmission data processing means which transfers the plurality of reception data flows to the second communication network connection port; and
a clock information transmission means which notifies frequency information on the first operation clock signal to the bandwidth control means.

8. A bandwidth control device in a node device which includes first communication network accommodation means connected to a first communication network, a second communication network accommodation means connected to a second communication network and operating in accordance with a first operation clock signal, and a data flow rate management means for adjusting a data flow rate of the reception data flow in accordance with bandwidth control, **characterized by** comprising:
a clock generation means which generates a second operation clock signal for bandwidth control operation;
a frequency deviation determination means which determines a deviation in frequency between the first operation clock signal and the second operation clock signal; and
a bandwidth adjustment means which adjusts a bandwidth assigned to a reception data flow to be transferred to the second communication network accommodation means, based on the deviation in frequency.

9. The bandwidth control device according to claim 8, **characterized in that** when the second operation clock signal has a higher frequency than the first operation clock signal, the bandwidth adjustment means reduces the bandwidth assigned to the reception data flow.

10. The bandwidth control device according to claim 9, **characterized in that** the bandwidth adjustment means, in response to a transfer request from the data flow rate management means, returns a transfer permission to the data flow rate management means at time intervals according to the bandwidth assigned to the reception data flow.

11. The bandwidth control device according to claim 10, **characterized in that** the bandwidth adjustment means prepares a bandwidth control bit string corresponding to the bandwidth assigned to the reception data flow and changes as many bit values in the bandwidth control bit string as a number equivalent to a reduction in the assigned bandwidth, thereby adjusting the time interval between returning the transfer permission.

12. The bandwidth control device according to claim 10 or 11, **characterized in that** when the data flow rate exceeds a predetermined transfer request threshold value, the data flow rate management means outputs a transfer request to the bandwidth adjustment means and, upon each receipt of an input of the transfer permission from the bandwidth adjustment means in response to the transfer request, transfers data of the reception data flow to the second communication network accommodation means.

13. The bandwidth control device according to any one of claims 8 to 12, **characterized in that** when the data flow rate exceeds a predetermined discard threshold value, the data flow rate management means discards data of the reception data flow received at the first communication network accommodation means.

14. A bandwidth control method for use in a node device which includes first communication network accommodation means connected to a first communication network, a second communication network accommodation means connected to a second communication network and operating in accordance with a first operation clock signal, and a data flow rate management means for adjusting a data flow rate of the reception data flow in accordance with bandwidth control, **characterized by**:
generating a second operation clock signal for bandwidth control operation;
determining a deviation in frequency between the first operation clock signal and the second operation clock signal; and
performing bandwidth control for a reception data flow to be transferred to the second communication network accommodation means, based on the deviation in frequency.

15. The bandwidth control method according to claim 14, **characterized by** reducing a bandwidth assigned to the reception data flow when the second operation clock signal has a higher frequency than the first operation clock signal.

16. The bandwidth control method according to claim 15, **characterized by**, in response to a transfer request from the data flow rate management means, returning a transfer permission to the data flow rate management means at time intervals according to the bandwidth assigned to the reception data flow.

17. The bandwidth control method according to claim 16, **characterized by** preparing a bandwidth control bit string corresponding to the bandwidth assigned to the reception data flow and changing as many bit values in the bandwidth control bit string as a number equivalent to a reduction in the assigned bandwidth, thereby adjusting the time interval between returning the transfer permission.

18. The bandwidth control method according to claim 16 or 17, **characterized in that** when the data flow rate exceeds a predetermined transfer request threshold value, the data flow rate management means outputs a transfer request and, upon each receipt of an input of the transfer permission in response to the transfer request, transfers data of the reception data flow to the second communication network accommodation means.

19. The bandwidth control method according to any one of claims 14 to 18, **characterized in that** when the data flow rate exceeds a predetermined discard threshold value, the data flow rate management means discards data of the reception data flow received at the first communication network accommodation means.

20. A communication network accommodation device in a node device which outputs a plurality of reception data flows received from a first communication network to a second communication network while performing bandwidth control, wherein the communication network accommodation device is connected to the second communication network, **characterized by** comprising:
a clock generation means which generates an operation clock signal for this communication network accommodation device;
a second communication network connection port connected to the second communication network;
a transmission data processing means which transfers the plurality of reception data flows to the second communication network connection port; and
a clock information transmission means which notifies frequency information on the operation clock signal to a bandwidth control section of the node device.
